# EUROPÄISCHE PATENTSCHRIFT

(11) **EP 2 492 469 B1**
(45) Veröffentlichungstag und Bekanntmachung des Hinweises auf die Patenterteilung: **21.08.2013**
(21) Anmeldenummer: 11191875.1
(22) Anmeldetag: 05.12.2011
(51) Int. Cl.: F02B 27/02, F02D 9/10, F16H 19/04, F02M 25/07

(54) **Stellvorrichtung zur Verstellung von Stellgliedern in einer Brennkraftmaschine**
Control for adjusting regulator control elements in an internal combustion engine
Dispositif de réglage pour le réglage d'actionneurs dans un moteur à combustion interne

(30) Priorität: 23.02.2011 DE 102011012203
(43) Veröffentlichungstag der Anmeldung: 29.08.2012
(73) Patentinhaber: Pierburg GmbH, 41460 Neuss (DE)
(72) Erfinder: Schröder, Thomas, 12589 Berlin (DE); Münich, Marc-Anton, 14476 Groß Glienicke (DE); Nitsch, Peter, 10781 Berlin (DE)
(74) Vertreter: Patentanwälte ter Smitten Eberlein Rütten Partnerschaftsgesellschaft

(56) Entgegenhaltungen:
- WO-A1-2006/097884
- DE-A1-102005 052 966
- GB-A- 2 113 797
- GB-A- 2 142 410
- JP-A- 2006 125 231
- US-A1- 2003 116 146

## Beschreibung

Die Erfindung betrifft eine Stellvorrichtung zur Verstellung von Stellgliedern in einer Brennkraftmaschine mit einer elektrischen Antriebseinrichtung, die über mindestens ein Getriebeelement auf ein Verstellorgan einwirkt, das über ein Koppelorgan mit einer Drehachse des Stellgliedes verbunden ist.

Stellvorrichtungen dieser Art dienen insbesondere zur Verstellung von Schaltklappen, die in Luftansaugkanalsystemen, als Drosselklappen, als Abgasklappen oder auch als sogenannte Waste-Gate-Klappen eingesetzt werden. Bisher werden häufig für derartige Aufgaben in Brennkraftmaschinen Unterdruckdosen eingesetzt. Ein Ersatz dieser Unterdruckdosen wird insbesondere erforderlich, da die gestiegenen Regelstell-Anforderungen nur mit einem elektromotorischen Antrieb realisiert werden können.

Als Ersatz für diese Unterdruckdosen sind elektrische Antriebseinrichtungen geeignet. Eine Stellvorrichtung mit elektrischer Antriebseinrichtung ist beispielsweise aus der DE 10 2005 052 966 A1 bekannt. Auch aus der US 2003/0116146 A1 ist eine elektrische Antriebseinrichtung für ein Abgasrückführventil bekannt.

Die Druckschrift DE4411630 C1 offenbart eine elektrische Ansteuerung für eine Drosselklappe.

Aufgrund der immer geringer werdenden Bauraumflexibilität, wächst die Anforderung nach Konzepten bei denen die herkömmliche Stellvorrichtung hinsichtlich Bauform, Baugröße, etc. beibehalten werden soll, jedoch eine elektrische Antriebseinheit aufweisen soll. Dies erscheint vor allem dann problematisch, wenn auch noch eine Hubstangen-Abtriebsbewegung mit zulässiger Schwenkbewegung, wie sie ja bei Unterdruckdosen aufgrund der einfachen Membranbefestigung zwangsläufig gegeben ist, vorgesehen sein soll.

Der Erfindung liegt daher die Aufgabe zugrunde, eine Stellvorrichtung mit elektrischer Antriebseinheit zu schaffen, die hinsichtlich Bauform, Baugröße und Bewegungsgraden einer herkömmlichen Stellvorrichtung mit Unterdruckdose entspricht.

Die Aufgabe wird dadurch gelöst, dass das Verstellorgan zumindest teilweise als Zahnstange ausgebildet ist, die über ein Federorgan an dem dem Koppelorgan entgegen gesetzten Ende in einem Gehäuse gelagert ist, wobei ein Anlaufelement die Zahnstange radial in Richtung der Drehachse des Getriebeelementes positioniert. Hierdurch wird auf besonders einfache Art und Weise eine Stellvorrichtung geschaffen, die eine Linearbewegung des Verstellorgans bei gleichzeitiger möglicher Schwenkbewegung gewährleistet. Dabei ist es besonders vorteilhaft, wenn das auf die Zahnstange einwirkende Getriebeelement als Zahnradritzel ausgeführt ist, wobei die Schwenkbewegung als Abwälzbewegung über das Zahnradritzel stattfindet.

Auf einfache Weise kann das Anlaufelement als feststehendes Anlaufprofil ausgeführt sein. Hierbei können kleine Schwenkbewegungen der Zahnstange durch ein definiertes Spiel zwischen Zahnradritzel, Zahnstange und Anlaufprofile ermöglicht werden. Es ist jedoch auch möglich und vorteilhaft, das Anlaufelement als Anlaufrolle auszuführen, wobei die Anlaufrolle seitliche Führungsflächen zur Führung der Zahnstange aufweist kann.

Um größere Schwenkbewegungen zu ermöglichen, kann die Anlaufrolle drehbar um die Zahnradritzelachse gelagert sein.

Das Federorgan ist vorzugsweise als Druckfeder ausgeführt, wodurch eine vorgespannte und einseitig spielfreie Positionierung der Verzahnung von Zahnstange und beispielsweise Zahnradritzel gewährleistet ist. Beispielsweise ist eine relativ leicht bewegliche Druckfedertellerlagerung in kegelstumpfförmigen Ansatzstücken in der Lage, die gewünschte und erforderliche Schwenkbewegung um die Zahnritzelachse zuzulassen.

Wenn das Zahnritzel und die Zahnstange eine Rundverzahnung aufweisen, kann eine größere Schwenkbewegung und somit ein größerer Fluchtungsversatz zwischen dem Ende des Verstellorgans und dem Angriffspunkt des Spannelementes vorgenommen werden. Dieser Effekt kann auch dadurch erwirkt werden, dass die Zahnstange ein kegelstumpfförmiges Ansatzstück aufweist, das in das Federelement hineinreicht.

Nachfolgend wird die Erfindung anhand einer bevorzugten Ausführungsform unter Bezugnahme auf die anliegende Zeichnung näher erläutert, hierin zeigt:
Figur 1 eine perspektivische Ansicht der erfindungsgemäßen, und
Figur 2 eine Seitenansicht eines Teils der erfindungsgemäßen Stellvorrichtung.

Die erfindungsgemäße Stellvorrichtung 1 weist eine elektrische Antriebseinrichtung 2 auf, die über ein als Zahnradritzel 4 ausgebildetes Getriebeelement auf eine Zahnstange 6 einwirkt. Die Zahnstange 6 ist über ein Koppelorgan 8 mit einer Drehachse 10 eines nicht weiter dargestellten Stellgliedes verbunden. Die Drehachse 10 ist hier exemplarisch in einem Gehäuse 1 gelagert. Als Stellglieder kommen hierbei insbesondere Klappenelemente in Frage. An dem dem Koppelorgan 8 entgegengesetzten Ende ist die Zahnstange 6 über ein Federorgan 12 in einem schematisch dargestellten Gehäuse 14 gelagert. Im vorliegenden Ausführungsbeispiel ist das Federorgan 12 als Druckfeder ausgeführt. Auf diese Weise ist gewährleistet, dass in jedem Betriebszustand die im Eingriff stehende Zahnflanke der Zahnstange 6 gegen die jeweilige Zahnflanke des Zahnradritzels 4 gedrückt wird und so eine einseitig spielfreie Positionierung stattfindet. Im unbelasteten Zustand ist ein definiertes Spiel zwischen Zahnstange 6 und Zahnradritzel 4 vorgesehen, was vorteilhaft in Bezug auf die Schwenkbarkeit der Zahnstange 6 ist.

Im Bereich des Zahnradritzels 4 ist ein Anlaufelement 16 vorgesehen, dass die Zahnstange 6 radial in Richtung der Drehachse 17 des Zahnradritzels 4 vorpositioniert. Durch diese besondere Anordnung ist eine Schwenkbarkeit der Zahnstange 6 um die Drehachse 17 des Zahnradritzels 4 gewährleistet. Im vorliegenden Fall ist das Anlaufelement 16 als Anlaufrolle ausgeführt. Über ein Lagerelement 24 ist diese Anlaufrolle 16 drehbar um die Drehachse 17 des Zahnradritzels 4 gelagert, wodurch der Schwenkwinkel der Zahnstange 6 noch einmal vergrößert werden kann. Darüber hinaus weist die Anlaufrolle 16 Führungsflächen 18, 20 auf, die eine seitliche Führung der Zahnstange 6 gewährleisten. Es sollte deutlich sein, dass natürlich auch ein feststehendes Anlaufprofil als Anlaufelement 16 eingesetzt werden kann.

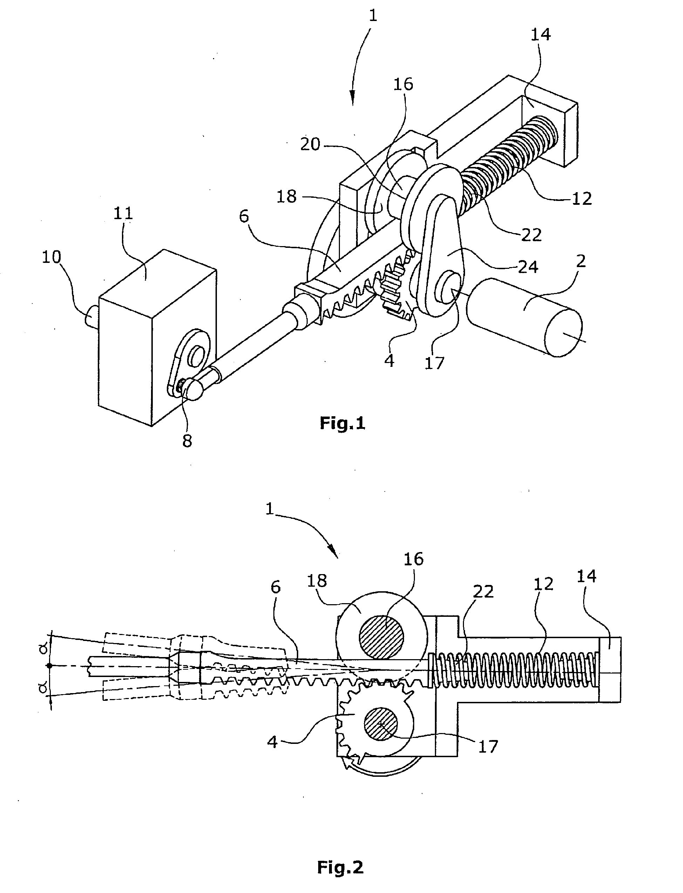

Figur 2 zeigt nun die Stellvorrichtung 1 in einer Seitenansicht ohne Koppelorgan 8. Deutlich zu erkennen ist hier der zu beiden Seiten der Zahnstange 6 mögliche Schwenkwinkel a. Die Zahnstange 6 weist ein kegelförmiges Ansatzstück 22 auf, das in die Druckfeder 12 hineinreicht, wodurch die Schwenkfähigkeit der Zahnstange noch weiter verbessert werden kann.

Die Zahnstange 6 und das Zahnradritzel 4 bilden im vorliegenden Ausführungsbeispiel eine Evolventenverzahnung. Natürlich ist es auch möglich, die Verzahnung als Zykloiden-Verzahnung auszuführen, wodurch die Schwenkbarkeit noch ein wenig erhöht werden kann.

Auch ist es denkbar die Anlaufrolle 16 noch mit einer entsprechenden Verzahnung zu versehen, so dass diese als zweites Antriebsritzel zu nutzen ist.

## Patentansprüche

1. Stellvorrichtung zur Verstellung von Stellgliedern in einer Brennkraftmaschine mit einer elektrischen Antriebseinrichtung (2), die über mindestens ein Getriebeelement (4) auf ein Verstellorgan (6) einwirkt, das über ein Koppelorgan (8) mit einer Drehachse (10) des Stellgliedes verbunden ist, wobei das Verstellorgan (6) zumindest teilweise als Zahnstange ausgebildet ist, und wobei ein Anlaufelement (16) die Zahnstange (6) radial in Richtung der Drehachse (17) des Getriebeelementes (4) positioniert,
**dadurch gekennzeichnet, dass** die Zahnstange (6) über ein Federorgan (12) an dem dem Koppelorgan (8) entgegen gesetzten Ende in einem Gehäuse (14) gelagert ist.

2. Stellvorrichtung nach Anspruch 1, **dadurch gekennzeichnet, dass** das Getriebeelement (4) ein Zahnradritzel ist.

3. Stellvorrichtung nach Anspruch 1, **dadurch gekennzeichnet, dass** das Anlaufelement (16) als feststehendes Anlaufprofil ausgeführt ist.

4. Stellvorrichtung nach Anspruch 1, **dadurch gekennzeichnet, dass** das Anlaufelement (16) als Anlaufrolle ausgeführt ist.

5. Stellvorrichtung nach Anspruch 3, **dadurch gekennzeichnet, dass** das die Anlaufrolle (16) seitliche Führungsflächen (18, 20) zur Führung der Zahnstange (6) aufweist.

6. Stellvorrichtung nach Anspruch 3 oder 4, **dadurch gekennzeichnet, dass** die Anlaufrolle (16) drehbar um die Ritzelachse gelagert ist.

7. Stellvorrichtung nach einem der vorhergehenden Ansprüche, **dadurch gekennzeichnet, dass** das Federorgan (12) als Druckfeder ausgeführt ist.

8. Stellvorrichtung nach einem der vorhergehenden Ansprüche, **dadurch gekennzeichnet, dass** das Zahnradritzel (4) und die Zahnstange (6) eine Rundverzahnung aufweisen.

9. Stellvorrichtung nach einem der vorhergehenden Ansprüche, **dadurch gekennzeichnet, dass** die Zahnstange (6) ein kegelstumpfförmiges Ansatzstück (22) aufweist, das in das Federelement (12) hineinreicht.

## Claims

1. Adjusting device for adjusting regulator control elements in an internal combustion engine, comprising an electric drive means (2) acting on an adjusting member (6) via at least one gear element (4), which adjusting member is connected with a rotary axis (10) of the regulator control element via a coupling member (8), wherein the adjusting member (6) is at least partially formed as a toothed rack, and wherein a guide element (16) positions the toothed rack (6) radially in the direction of the rotary axis (17) of the gear element (4),
**characterized in that** a spring member (12) supports the toothed rack (6) is supported in a housing (14) at the end opposite the coupling member (8).

2. Adjusting device of claim 1, **characterized in that** the gear element (4) is a pinion gear.

3. Adjusting device of claim 1, **characterized in that** the guide element (16) is designed as a fixed guide profile.

4. Adjusting device of claim 1, **characterized in that** the guide element (16) is designed as a guide roller.

5. Adjusting device of claim 3, **characterized in that** the guide roller (16) has lateral guide surfaces (18, 20) to guide the toothed rack (6).

6. Adjusting device of claim 3 or 4, **characterized in that** the guide roller (16) supported for rotation about the pinion axis.

7. Adjusting device of one of the preceding claims, **characterized in that** the spring member (12) is designed as a compression spring.

8. Adjusting device of one of the preceding claims, **characterized in that** the pinion gear (4) and the toothed rack (6) have a round toothing.

9. Adjusting device of one of the preceding claims, **characterized in that** the toothed rack (6) comprises a frustoconical stub portion (22) extending into the spring element (12).

## Revendications

1. Dispositif de réglage pour le réglage d'actionneurs dans un moteur à combustion interne, comprenant un moyen d'entrainement électrique (2) agissant, par l'intermédiaire d'au moins un élément de transmission (4), sur un organe de réglage (6) lié, par l'intermédiaire d'un organe d'accouplement (8), à un axe de rotation (10) dudit actionneur, ledit organe de réglage (6) étant au moins partiellement formé comme crémaillère, et un élément de guidage (16) positionnant ladite crémaillère radialement vers l'axe de rotation (17) dudit élément de transmission (4),
**caractérisé en ce que** ladite crémaillère est supportée, par l'intermédiaire d'un organe de ressort (12), dans un boitier (14) par son extrémité opposée audit organe d'accouplement (8).

2. Dispositif de réglage selon la revendication 1, **caractérisé en ce que** ledit élément de transmission (4) est un pignon denté.

3. Dispositif de réglage selon la revendication 1, **caractérisé en ce que** ledit élément de guidage (16) est réalisé sous forme d'un profilé de guidage fixe.

4. Dispositif de réglage selon la revendication 1, **caractérisé en ce que** ledit élément de guidage (16) est réalisé sous forme d'un rouleau de guidage.

5. Dispositif de réglage selon la revendication 3, **caractérisé en ce que** ledit rouleau de guidage (16) comprend des surfaces de guidage latérales (18, 20) pour le guidage de laite crémaillère (6).

6. Dispositif de réglage selon la revendication 3 ou 4, **caractérisé en ce que** ledit rouleau de guidage (16) est supporté en rotation autour de l'axe du pignon.

7. Dispositif de réglage selon l'une quelconque des revendications précédentes, **caractérisé en ce que** ledit organe de ressort (12) est réalisé sous forme d'un ressort de compression.

8. Dispositif de réglage selon l'une quelconque des revendications précédentes, **caractérisé en ce que** ledit pignon denté (4) et ladite crémaillère (6) présentent une denture ronde.

9. Dispositif de réglage selon l'une quelconque des revendications précédentes, **caractérisé en ce que** ladite crémaillère (6) comprend un embout tronconique (22) s'étendant dans ledit élément de ressort (12).
